# EUROPEAN PATENT APPLICATION

(11) **EP 1 983 491 A1**
(43) Date of publication of application: **22.10.2008**
(21) Application number: 07290493.1
(22) Date of filing: 20.04.2007
(51) Int. Cl.: G07F 7/08, G06Q 20/00

(54) **A mobile equipment communication through bar code display**

(71) Applicant: Axalto S.A., 92190 Meudon (FR); Gemplus S.A., 13420 Gémenos (FR)
(72) Inventor: Rangoni, Gabriel, 92190 Meudon (FR); Barbe, Serge, 13420 Gémenos (FR); Guiragossian, Michel, 13420 Gémenos (FR)
(74) Representative: Jacquot, Ludovic R. G.

(57) **Abstract**

The invention relates to a method for communicating between a mobile equipment and a reader, such mobile equipment having a processor, a memory and a screen, the method comprising the step which consists in reading data in the memory of the mobile equipment (30), the step which consists in displaying such data as a bar code (70) on the screen of the mobile equipment, and the step which consists in reading such bar code with a bar code reader.

## Description

The invention relates to communication between a mobile transmissions equipment, typically handheld equipment such as a mobile phone, a PDA (Personal Digital assistant) or a mobile TV receiver and an associated local reader.

The reader may be for example a payment reader in the case of a payment enabled mobile phone (NFC phone / Near Field Communication phone), or for example a PC (Personal Computer) in the case of synchronizing communications between the mobile phone and the PC.

Many communication schemes exist between mobile phone or PDAs and associated readers. One can quote Universal Serial Bus communications, infrared beam communications, Bluetooth communications.

Near Filed communications arise which allow communication between an NFC payment reader and a secure token as a removable part of the mobile equipment, such as a Subscriber Identity Module card.

Theses type of communications brings many advantages, in particular as concerns easiness for he end-user, speed of data transfers, and reliability.

However, those communication schemes are often considered as expensive, both for the merchants who need to invest in costly readers, and also for end-users who need to opt for the highest price mobile equipments if they want to benefit from the advantages of these kinds of communications.

The purpose of the invention is to propose a new type of communication between a mobile transmission equipment such as a mobile phone, and an associated local reader such as a payment reader, which is less expensive to implement than the known communication schemes, and which allows a fast and user-friendly transfer of data between the mobile equipment and the local reader.

Such purpose is achieved by means of the present invention as recited in the appended claims.

Other benefits, purposes, and aspects of the invention will appear through the following description which is made in reference to the figures, among which :
- figure 1 represents schematically a context according to a preferred embodiment of the invention,
- figure 2 represents a set of terminals in a preferred embodiment of the invention,
- figure 3 represents a broadcast stream according to the same embodiment of the invention,
- Figures 4 and 5 represent a mobile terminal according to an embodiment of the invention.

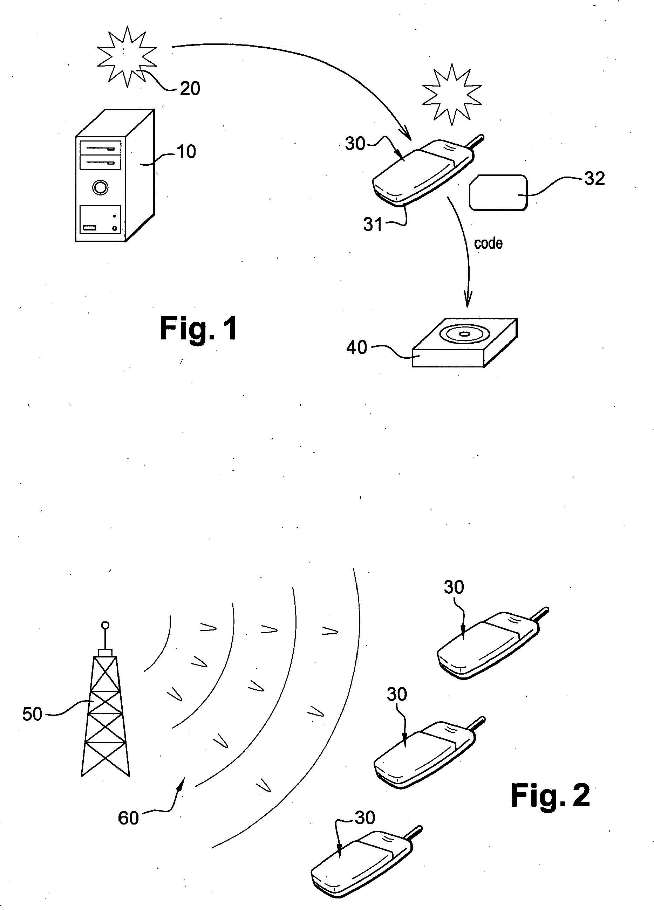

An example of communication between a mobile equipment and a reader according to the invention will now be given in reference to figures 1 to 5.

On figure 1, a remote server 10 sends a financial right 20 to a mobile equipment 30. The mobile equipment 30 comprises a mobile terminal 31 and a subscriber identity module 32 hosted in the mobile terminal. The mobile equipment 30 is a mobile phone, the subscriber identity module thereby allowing the associated end-user to access to a telephony network thanks to the credentials securely stored inside the subscriber identity module 32.

The financial right 20 is a discount ticket allowing the end-user to actually pay a reduced amount onto a specific product in a specific retailer shop. The discount ticket therefore has the financial right of the corresponding discount which is about to be granted by the retailer shop if the product is actually bought by the end-user.

For the purpose of payments, the Mobile equipment 30 is Near Field Communication enabled. In the present case the mobile equipment 30 comprises a subscriber identity module 32 which hosts a payment application over a communication protocol specially adapted for communicating data over an antenna of the mobile equipment.

Such antenna is a Near Field Communication antenna embedded in the mobile terminal 31 which describes a loop at the periphery thereof.

The payment application of the subscriber identity module 32 comprises credentials for authorizing a bank account to be debited when the mobile equipment 30 is placed in close proximity to an ascertained NFC reader 40.

Once the discount ticket 20 stored inside the memory of the subscriber identity module 32, the discount ticket will be used when proceeding to an NFC payment.

The present discount ticket is made of a set of instructions which are executed by the subscriber identity module 32 when proceeding to a payment. The set of instructions combine with instructions of the payment module of the subscriber identity module 32, so as to be executed before the instructions of the payment module. For that purpose, the discount ticket instructions are stored in a part of the memory of the subscriber identity module which is dedicated to executable programs and which part of the memory is read as a first step before executing the payment application.

When proceeding to payment of a product, for example the last cheeseburger in a fast-food restaurant, the NFC enabled mobile equipment 30 is placed closely above the NFC reader 40, and the subscriber identity module 32 first executes the discount ticket instructions.

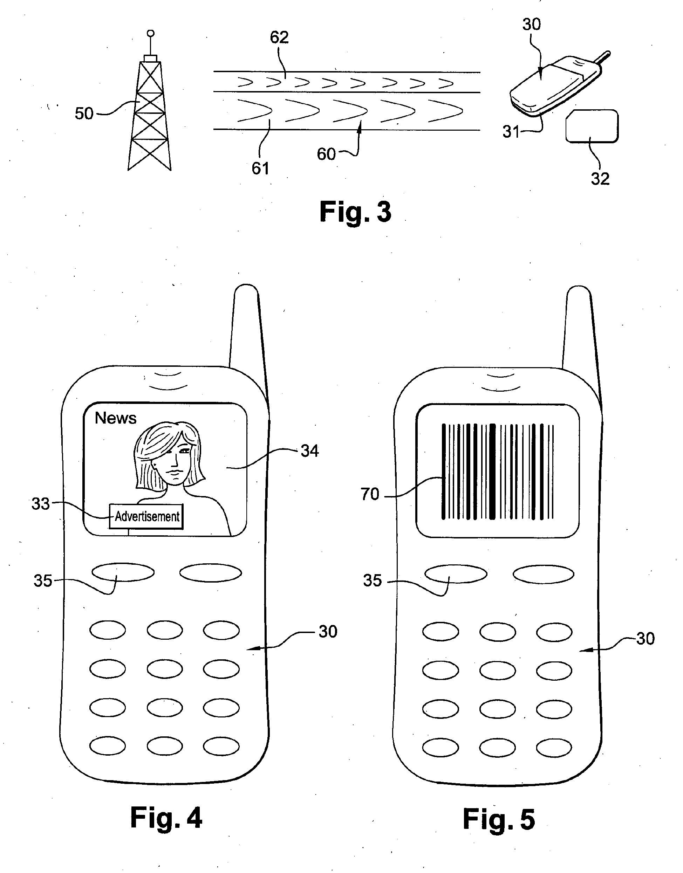

Those instructions control the subscriber module 32 into displaying a bar code 70 on the screen of the mobile phone, such bar code representing a special code, as represented on figure 5.

The instructions comprise a description, preferably in XML language, of the bar code image to be displayed. In an alternate embodiment, the bar code described in a data file associated with the set of instructions in the discount ticket.

Such data file may be a .jpg file for example.

The bar code is therefore displayed to the merchant as a first step. When proceeding to payment of the cheeseburger, the NFC reader 40 sends an authorization request to the nearby NFC mobile equipment with the required amount for the cheeseburgor, and monitors the reply messages from the mobile equipment 30. The NFC mobile equipment 30 then executes the discount ticket instructions and displays the discount bar code. The merchant and the end-user then understand that a discount is to be applied on the present payment. The merchant therefore places a bar code optical reader on the screen of the mobile phone as those applied onto discount tickets made of paper.

The bar code image is displayed with dimensions which are specifically chosen for being readable by an optical bar code reader which is originally intended for paper supported bar code. This way, no particular reader equipment has to be developed or invested in on the side of the merchant.

The bar code displayed on the screen of the mobile equipment and scanned by the merchant is recognized by the database of the merchant. The database of the merchant and the associated NFC reader 40 then execute an amount modifying program, which neutralized the original payment request and makes a new payment request for an amount that is reduced of a value corresponding to the discount ticket as stored in the database of the merchant.

The NFC reader 40 of the merchant also sends a specific message to the NFC equipment 30 which is recognized by the discount ticket application and neutralizes the discount ticket application for the next payment request as received by the mobile equipment 30.

Preferably, the discount ticket instructions 20 comprise an identifier of the NFC reader(s) of the merchant, so as to display the discount ticket bar code only if an NFC reader 40 of the intended merchant has been identified as being in close proximity to the NFC mobile equipment. The NFC reader 40 identifies itself to the NFC mobile equipment 30 at the beginning of the payment process for such purpose.

The NFC reader then proceeds to a new payment request for the reduced payment amount and the NFC payment is realized.

In an alternate embodiment, the discount ticket 20 as downloaded prior to payment consists only in the specific code and an NFC reader identifier, and the discount ticket application is a set of instructions which pre-exists in the subscriber identity module 32, whose role is to transform the specific code into a bar code image, once an expected reader has sent a payment request to the NFC mobile equipment and such reader has been recognized by the application.

Placing such application in a secure token allows to secure the display of such bar code, i.e. to avoid that an unauthorized copy of a bar code be displayed by any type of mobile handset without consent of the merchant.

In addition to NFC functionality, the presently described mobile equipment 30 is operable for receiving and displaying live mobile TV programs. As depicted on figure 2, a remote broadcast server 50 broadcasts mobile TV programs on a set of mobile equipment such as equipment 30, all referenced 30 on figure 2 for the sake of simplicity.

A stream of data 60 transits from the remote broadcast entity 50 to the mobile equipments 30 which is represented on figure 3.

Stream 60 comprises mobile TV data 61 which represent the most part of the stream, and comprises also a reserved channel 62 for carrying data which may be used for other purposes. Such channel 62 is originally aimed at carrying menu data or additional information data such as those appearing as icons onto displayed mobile TV images which may be erased from the screen by simple actuation of a dedicated button on the keyboard of the mobile equipment 30.

It is proposed in the present embodiment to carry an advertisement icon 33 in such channel 62, which appears as on icon (figure 4) on a screen 34 of the mobile equipment 30.

Mobile equipment 30 hosts an advertising display application which receives data describing the icon 34, recognizes such data and displays the icon 34 described by such data on screen 33.

The advertising icon comprises a message which invites the end-user to actuate such icon by pressing on a particular button, here the closest button to the icon, referenced 35 on figure 4. The advertising display application monitors actuation of button 35 and, when the end-user presses such button, displays a detailed advertisement screen on the same product as the one announced in the icon 33.

For displaying the detailed advertisement screen the application retrieves data describing such detailed advertisement screen from channel 62.

In the presently described embodiment, icon 33 displays a message of the type : "display X cheeseburger advertisement and get a 0,5 euros discount at your nearest X cheeseburger shop".

When the end-user decides to actuate icon 33, the detailed advertisement screen is displayed, and such screen also displays a message of the type "you have obtained a special 0,5 euros discount right stored in your NFC mobile equipment which may be used in your nearest X burgers shop".

For the purpose of such process, channel 62 is used not only for carrying the data of the icon 33 and the data of the detailed advertisement screen, but also for carrying a discount ticket 20 as the one previously described.

The icon data are first broadcasted in stream 60, more precisely in channel 62, and the discount ticket data are the broadcasted inside channel 62 for a certain period of time so that the discount data are retrieved from channel 62 whenever the end-user actuates icon 33.

The advertisement display application, when it displays the detailed advertisement screen, triggers a discount ticket retrieving application which retrieves the discount ticket data from channel 62, and stores them in the mobile equipment 30.

Preferably, the discount ticket is stored inside the memory of the subscriber identity module 32. The discount ticket retrieving application is preferably hosted also inside the subscriber identity module 32. Such retrieving application stores or installs the discount ticket into the memory of subscriber identity module, according to whether the discount ticket is an application or a set of data, i.e. reduced to discount code and NFC reader(s) identifier as in one of the previously described examples.

In an alternate embodiment, the discount ticket is retrieved at the same time as the data for the advertisement icon 33, the discount ticket being stored in a neutral status, and the discount ticket is transformed into an active status by a dedicated application when the end-user actuates the icon 33. For that purpose, a special code is retrieved from channel 62 when the end-user actuates icon 33, which special code is combined with neutral status discount ticket for transforming the discount ticket into active status. Retrieving of the special code for making the discount ticket active and combining the discount ticket with activating code is preferably performed by an activating application in the subscriber identity module 32 which activating application is triggered by the advertisement display application. In such embodiment, the financial right is made of the neutral discount ticket combined with the activating code.

In a particular embodiment, the discount ticket may be used for a plurality of purchases, either with a decrementing counter for each use of the discount ticket, the decrementing ticket being in the database of the merchant or in the mobile equipment 30, either on a predetermined period of time which is monitored either in the database of the merchant or in the mobile equipment.

Making use of the mobile TV stream for download of the bar code data and using such bar code is advantageous because it allows a full getting and delivering process of a financial right which is easy, extremely fast and without any contact.

Such download of financial right in the mobile TV stream allows to carry out a large scale information and incentive campaign for a very low cost onto the actors of such a campaign.

The invention is not limited to mobile telephony. A mobile terminal operable for mobile TV but not for telephony, i.e. an "unconnected" device may also be used for receiving such a financial right, preferably a discount ticket and making use of such, preferably through an NFC payment module of the mobile TV terminal.

Although described in connection to a mobile equipment which is operable for NFC payment, the invention is not limited to such NFC operable mobile equipments. Display of the bar code may be triggered by the end-user himself through a menu dedicated to discount tickets, which menu, once launched, proposes to the end-user a set of downloaded discount ticket bar codes available for display. The chosen and displayed bar-code may then be scanned by an optical reader at the cashier desk of the merchant, and the following operations of payment may be done through any type of payment process, i.e. by cash or credit card for example.

Discount ticket is not the only example of financial right associated with the bar code. The bar code may be a full paying ticket, such as a cinema ticket or a ticket for a concert for example.

## Claims

1. A method for communicating between a mobile equipment and a reader, such mobile equipment having a processor, a memory and a screen, the method comprising the step which consists in reading data in the memory of the mobile equipment (30), the step which consists in displaying such data as a bar code (70) on the screen of the mobile equipment, and the step which consists in reading such bar code with a bar code reader.

2. The method according to claim 1, **characterized in that** the mobile equipment comprises a secure token (32) having a memory and the method comprises the step which consists in storing the said data to be displayed as a bar-code inside the memory of the secure token.

3. The method according to claim 1 or claim 2, **characterized in that** the secure token (32) is a subscriber identity module for a mobile telephony network.

4. The method according to anyone of the preceding claims, **characterized in that** the bar code reader is placed at a cashier desk and the data displayed as a bar code (70) are financial rights data which are taken into account by means of the reader for a payment.

5. The method according to claim 4, **characterized in that** the financial rights data which are displayed as a bar code are a discount ticket which is taken into account by a database associated with the reader for reducing a payment amount debited to an owner of the mobile equipment (30).
